# EUROPÄISCHE PATENTANMELDUNG

(11) **EP 3 608 648 A1**
(43) Veröffentlichungstag der Anmeldung: **12.02.2020**
(21) Anmeldenummer: 18188445.3
(22) Anmeldetag: 10.08.2018
(51) Int. Cl.: G01M 3/02, E04D 13/00

(54) **VORRICHTUNG UND VERFAHREN ZUR ERKENNUNG EINES LECKS**

(71) Anmelder: Trummer, Johann, 8342 Gnas (AT)
(72) Erfinder: Trummer, Johann, 8342 Gnas (AT)
(74) Vertreter: Wirnsberger & Lerchbaum Patentanwälte OG

(57) **Zusammenfassung**

Die Erfindung betrifft eine Vorrichtung (1) zur Erkennung eines Lecks, insbesondere bei Dächern, umfassend zumindest eine Leitung (2), in welcher ein Fluid führbar ist, wobei eine Saugeinrichtung (3) mit einem ersten Ende der zumindest einen Leitung (2) in Fluidverbindung steht. Um eine frühzeitige Leckerkennung zu ermöglichen, ist erfindungsgemäß ein saugfähiges Material (4) vorgesehen und ein zweites Ende der zumindest einen Leitung (2) so angeordnet, dass das Fluid aus dem saugfähigen Material (4) abführbar ist, wobei zumindest eine Messeinrichtung (5) zur Analyse des Fluids mit der Leitung (2) in Fluidverbindung steht.

Weiter betrifft die Erfindung eine Konstruktion (6) mit einer unteren Schicht (7), einer oberen Schicht (8) und einer derartigen Vorrichtung (1), wobei das saugfähige Material (4) zwischen der unteren Schicht (7) und der oberen Schicht (8) angeordnet ist und die Konstruktion (6) mehrere Messbereiche aufweist, wobei zu jedem Messbereich zumindest eine korrespondierende Leitung (2) vorgesehen ist, deren zweites Ende im jeweiligen Messbereich positioniert ist.

Darüber hinaus betrifft die Erfindung eine Verwendung einer derartigen Vorrichtung (1).

Weiter betrifft die Erfindung ein Verfahren zur Erkennung eines Lecks, insbesondere bei Dächern, wobei mit einer Saugeinrichtung (3) ein Unterdruck an zumindest eine Leitung (2) angelegt wird, um ein Fluid durch die Leitung (2) zu befördern, wobei das Fluid aus einem saugfähigen Material (4) abgeführt und zu einer Messeinrichtung (5) geführt wird, wobei mit der Messeinrichtung (5) zumindest ein Messwert des Fluids erfasst wird, welcher mit zumindest einem weiteren Messwert verglichen wird.

## Beschreibung

Die Erfindung betrifft eine Vorrichtung zur Erkennung eines Lecks, insbesondere bei Dächern, umfassend zumindest eine Leitung, in welcher ein Fluid führbar ist, wobei eine Saugeinrichtung mit einem ersten Ende der zumindest einen Leitung in Fluidverbindung steht.

Weiter betrifft die Erfindung eine Konstruktion, insbesondere ein Dach, mit einer unteren Schicht, einer oberen Schicht und einer derartigen Vorrichtung.

Darüber hinaus betrifft die Erfindung eine erste und eine zweite Verwendung einer derartigen Vorrichtung.

Schließlich betrifft die Erfindung ein Verfahren zur Erkennung eines Lecks, insbesondere bei Dächern, wobei mit einer Saugeinrichtung ein Unterdruck an zumindest eine Leitung angelegt wird, um ein Fluid durch die Leitung zu befördern.

Bei Gebäuden führt unerwünschter Wassereintritt in der Regel zu Schäden, deren Behebung aufwändig ist. Abgesehen von meist plötzlich auftretenden heftigen Überschwemmungen können insbesondere längere und weniger intensive, aber stetige Wassereintritte zu nachhaltigen Gebäudeschäden führen, die unter Umständen zu spät erkannt werden und nicht mehr sanierbar sind. Dies kann beispielsweise bei ständigem Wassereintritt in einem Keller oder auch dachseitig auftreten, wobei Flachdächer hierfür bekanntermaßen besonders betroffen sind.

Aus dem Stand der Technik sind Vorrichtungen zur Erkennung eines Lecks bei Dächern bekannt, bei welchen ein Unter- oder Überdruck angelegt wird, um das Leck zu detektieren.

Bei einer Vorrichtung gemäß der CH 664 184 A5 sind luftdicht abgeschlossene Dachelemente mit einem inneren Hohlraum vorgesehen, wobei eine Leitung in den Hohlraum ragt und mittels Saugeinrichtung ein Unterdruck im Hohlraum anlegt wird. Um das Leck zu detektieren, wird der angelegte Druck gemessen, wobei eine Veränderung des gemessenen Drucks auf ein Leck hindeutet.

Nachteilig ist hierbei, dass Dachkonstruktionen mit einer derartigen Vorrichtung aufwändig in der Herstellung sind, da luftdicht abgeschlossene Elemente erforderlich sind. Darüber hinaus wird mit derartigen Vorrichtungen ein Leck selbst dann erkannt bzw. angezeigt, wenn keine Feuchtigkeit eintritt oder eine eintretende Feuchtigkeit vernachlässigbar ist.

Aufgabe der Erfindung ist es daher, eine Vorrichtung zur Erkennung eines Lecks eines Bauwerkes anzugeben, mit welcher ein Leck zuverlässig, frühzeitig und in einfacher Art und Weise erkannt werden kann, insbesondere bei einem Dach wie einem Flachdach.

Eine weitere Aufgabe der Erfindung ist es, eine Konstruktion mit einer derartigen Vorrichtung anzugeben, bei welcher ein Leck zuverlässig, frühzeitig und in einfacher Art und Weise erkannt und lokalisiert werden kann.

Darüber hinaus ist es Aufgabe der Erfindung, eine Verwendung für eine derartige Vorrichtung anzugeben.

Schließlich ist es Aufgabe der Erfindung, ein zuverlässiges und einfaches Verfahren zur Erkennung eines Lecks anzugeben, mit welchem ein gegebenenfalls auszubesserndes Leck erkannt wird.

Die erste Aufgabe wird erfindungsgemäß dadurch gelöst, dass bei einer Vorrichtung der eingangs genannten Art ein saugfähiges Material vorgesehen und ein zweites Ende der zumindest einen Leitung so angeordnet ist, dass das Fluid aus dem saugfähigen Material abführbar ist, wobei zumindest eine Messeinrichtung zur Analyse des Fluids mit der Leitung in Fluidverbindung steht. Beim abzuführenden Fluid kann es sich um ein Gas, beispielsweise um Umgebungsluft, oder um eine Flüssigkeit, beispielsweise Wasser, insbesondere um Regenwasser, handeln. Vorzugsweise ist die Saugeinrichtung als Einrichtung zur Erzeugung eines Unterdrucks, beispielsweise als Pumpe, ausgebildet. In der Regel ist die zumindest eine Leitung als Schlauch oder Rohr ausgebildet.

Ein mit der erfindungsgemäßen Vorrichtung erzielter Vorteil ist vor allem darin zu sehen, dass die Flüssigkeit, welche durch das Leck beispielsweise in einen Zwischenraum sickert, von dem saugfähigen Material aufgenommen wird. Im Bereich des saugfähigen Materials wird dadurch eine Luftfeuchtigkeit erhöht, welche in der Folge von der Messeinrichtung erfasst werden kann. Somit ist kein luftdicht abgeschlossenes System erforderlich, bei welchem ein von der Saugeinrichtung angelegter Druck gemessen wird.

Zumindest eine Leitung bedeutet, dass eine einzelne Leitung vorgesehen sein kann. Es können aber auch mehrere Leitungen vorgesehen sein. Bei mehreren Leitungen können diese jeweils allesamt oder auch nur ein Teil der Leitungen die nachstehend erläuterten Merkmale aufweisen.

Günstig ist es, wenn das Fluid, insbesondere die Luft, aus dem saugfähigen Material durch die Leitung zur Messeinrichtung geführt wird. Dadurch kann durch eine Messung von physikalischen Größen, wie Temperatur oder Luftfeuchtigkeit, ein Leck, über welches beispielsweise die Flüssigkeit eintritt, frühzeitig erkannt werden. Ein Leck, welches bloß luftdurchlässig ist, jedoch für Flüssigkeiten dicht ist, wird mit einer derartigen Vorrichtung nicht erkannt. Allerdings erfordert ein derartiges Leck, beispielsweise bei einem Dach, üblicherweise auch keine Reparatur.

Damit eine Leckdetektion in einem großen Bereich erfolgen kann, kann vorgesehen sein, dass das saugfähige Material flächig ausgebildet ist. Vorzugsweise umfasst das saugfähige Material eine kapillaren-bildende Lage bzw. Schicht. Es hat sich bewährt, wenn das saugfähige Material als Gewebe, insbesondere als Vlies, ausgebildet ist. Das saugfähige Material kann aus einem Material bestehen oder ein Materialgemisch umfassen.

Ein weiterer Vorteil ergibt sich, wenn die Messeinrichtung zur Messung einer Luftfeuchtigkeit und/oder einer Temperatur ausgebildet ist. Da die Flüssigkeit, welche durch das Leck eintritt, die Feuchtigkeit und gegebenenfalls die Temperatur des Fluids beeinflusst, ist mit einer solchen Messeinrichtung das Leck zuverlässig erkennbar. Die Messeinrichtung kann hierfür einen oder mehrere Sensoren, insbesondere einen Feuchtigkeitssensor und/oder einen Temperatursensor, umfassen. Darüber hinaus kann die Messeinrichtung zur Messung weiterer physikalischer Eigenschaften bzw. Größen des Fluids ausgebildet sein und hierfür entsprechende Sensoren aufweisen.

Mit Vorteil weist die zumindest eine Leitung ein Absperrventil auf. Dies ist in der Regel dann zweckmäßig, wenn mehrere Leitungen vorgesehen sind, die mit einer einzigen gemeinsamen Messeinrichtung verbunden sind. Dadurch kann für jede Leitung das durch diese hindurchgeführte Fluid separat analysiert werden. Auch wenn nur eine Leitung vorgesehen ist, kann es für Wartungsarbeiten günstig sein, wenn die Leitung absperrbar ist.

Um zu gewährleisten, dass ein angelegter Unterdruck bzw. eine Saugkraft nicht zu groß ist, kann vorgesehen sein, dass die Saugeinrichtung einen Regler aufweist, mit welchem eine Saugkraft auf einen definierten Wert, insbesondere auf einen Wert zwischen 0,1 bar und 1 bar, besonders bevorzugt zwischen 0,2 bar und 0,3 bar, einstellbar ist. Mit einer solchen Maßnahme wird vermieden, dass das saugfähige Material komprimiert wird, wodurch eine Abführung des Fluids behindert wäre. Üblicherweise umfasst der Regler ein regelbares Ventil. Gegebenenfalls kann die Saugeinrichtung eine Druckmesseinrichtung aufweisen.

Es kann vorgesehen sein, dass die zumindest eine Leitung zumindest teilweise oberhalb des saugfähigen Materials verlegt ist. Durch diese Anordnung ist gewährleistet, dass das saugfähige Material flach aufliegt. Darüber hinaus können gegebenenfalls bei einer oberhalb der Vorrichtung bzw. des saugfähigen Materials verlegten Schicht, beispielsweise bei einer Dämmung, Ausnehmungen für die Leitung vorgesehen sein. Alternativ kann eine verformbare Schicht vorgesehen sein, welche sich um die Leitung schmiegt.

Günstig ist es, wenn die zumindest eine Leitung an dem zweiten Ende ein Saugstück aufweist, welches an dem saugfähigen Material befestigbar oder befestigt ist. Dadurch ist gewährleistet, dass das angesaugte Fluid direkt aus dem saugfähigen Material kommt.

Mit Vorteil sind mehrere Leitungen vorgesehen sind, welche mit der Saugeinrichtung in Fluidverbindung stehen. Somit wird eine Leckerkennung bzw. eine Messung in mehreren Messbereichen ermöglicht, wobei jede Leitung in einen Messbereich führt.

Um einen Aufbau zu vereinfachen, kann vorgesehen sein, dass die Leitungen in ein gemeinsames Sammelstück münden, wobei die Saugeinrichtung über das Sammelstück mit den Leitungen in Fluidverbindung steht. Somit ist nur eine einzige Saugeinrichtung erforderlich, welche mittelbar über das Sammelstück mit den Leitungen verbunden ist. Besonders bevorzugt ist vorgesehen, dass die Messeinrichtung zwischen der Saugeinrichtung und dem Sammelstück positioniert ist. Dadurch ist bloß eine einzige Messeinrichtung erforderlich, mit welcher das Fluid aus den Leitungen analysiert werden kann. Hierfür kann es vorteilhaft sein, wenn jede Leitung zusätzlich ein Absperrventil aufweist, sodass das Fluid aus jeder Leitung separat analysiert werden kann, indem jeweils bloß eine Leitung geöffnet wird. Alternativ dazu kann für jede Leitung eine separate Messeinrichtung vorgesehen sein.

Die weitere Aufgabe wird mit einer Konstruktion der eingangs genannten Art gelöst, wobei das saugfähige Material zwischen der unteren Schicht und der oberen Schicht angeordnet ist und die Konstruktion mehrere Messbereiche aufweist, wobei zu jedem Messbereich zumindest eine korrespondierende Leitung vorgesehen ist, deren zweites Ende im jeweiligen Messbereich positioniert ist. Bei der Konstruktion kann es sich um ein beliebiges Bauobjekt handeln.

Ein damit erzielter Vorteil ist insbesondere darin zu sehen, dass ein Leck in verschiedenen Bereichen detektiert werden kann, wodurch eine Lokalisierung des Lecks ermöglicht wird. Je mehr Leitungen vorgesehen sind, desto kleiner sind die korrespondierenden Messbereiche. Somit wird eine Genauigkeit der Lokalisierung erhöht. Hierfür kann vorgesehen sein, dass das saugfähige Material so ausgebildet ist, dass die unterschiedlichen Messbereiche zusammenhängen bzw. zwischen diesen keine physikalischen Barrieren vorhanden sind. Die Konstruktion kann also in fiktive Messbereiche unterteilt sein. Diese umfassen im Wesentlichen eine bestimmte Fläche im Bereich des zweiten Endes der Leitung. Gegebenenfalls können die Messbereiche überlappen. Alternativ kann vorgesehen sein, dass für die Messbereiche jeweils ein saugfähiges Material und/oder eine physikalische Barriere zwischen den Messbereichen vorgesehen ist. Eine physikalische Barriere kann beispielsweise ein wasserabweisender Kunststoff sein.

Darüber hinaus wird die weitere Aufgabe bei einer Verwendung einer derartigen Vorrichtung zur Erkennung und/oder Lokalisierung eines Lecks bei Abschlusselementen, wie beispielsweise Wänden oder Dächern, unter Ausnutzung der genannten Vorteile gelöst.

Ferner wird die verfahrensmäßige Aufgabe bei einem Verfahren der eingangs genannten Art dadurch gelöst, dass das Fluid aus einem saugfähigen Material abgeführt und zu einer Messeinrichtung geführt wird, wobei mit der Messeinrichtung zumindest ein Messwert des Fluids erfasst wird, welcher mit zumindest einem weiteren Messwert verglichen wird.

Ein damit erzielter Vorteil ist insbesondere darin zu sehen, dass das Fluid direkt aus dem saugfähigen Material, in welchem eine Feuchtigkeit angesammelt ist, abgeführt wird, wodurch ein Leck frühzeitig erkannt wird. Hierfür kann beispielsweise ein kontinuierliches Erfassen von Messwerten erfolgen, wobei eine Änderung des aktuellen Messwertes im Vergleich mit vorangegangenen Messwerten auf ein Leck hindeutet. Dies ist beispielsweise dann der Fall, wenn eine gemessene Feuchtigkeit im Vergleich zu einer früheren gemessenen Feuchtigkeit erhöht ist.

Vorzugsweise wird das Fluid aus mehreren Messbereichen durch korrespondierende Leitungen abgeführt, wobei für die Messbereiche separate Messwerte erfasst werden. Dadurch kann jeder Messbereich separat auf ein Leck überprüft werden.

Ferner ist es günstig, wenn die erfassten Messwerte verglichen werden, um ein Leck in jenem Messbereich zu orten, dessen Messwert von den übrigen Messwerten über ein Toleranzintervall hinaus abweicht. Somit ist keine frühere Messung erforderlich, da beispielsweise die übrigen Messwerte als Referenz dienen. Zur Auswertung und Analyse bzw. zum Vergleich der Messwerte kann eine Analyse- bzw. Auswerteeinheit vorgesehen sein. Das Toleranzintervall ist üblicherweise durch eine Schwankungsbreite der Messung vorgegeben, wobei erst eine Abweichung die über dieses Toleranzintervall hinaus geht als signifikante Abweichung eingestuft wird.

Weitere Merkmale, Vorteile und Wirkungen ergeben sich aus den nachfolgend dargestellten Ausführungsbeispielen. In den Zeichnungen, auf welche dabei Bezug genommen wird, zeigen:
Fig. 1 eine schematische Darstellung einer erfindungsgemäßen Vorrichtung;
Fig. 2 eine Dachkonstruktion mit einer Vorrichtung zur Erkennung eines Lecks;
Fig. 3 eine schematische Darstellung einer Vorrichtung mit mehreren Messeinrichtungen;
Fig. 4 eine schematische Darstellung einer Vorrichtung mit mehreren Absperrventilen.

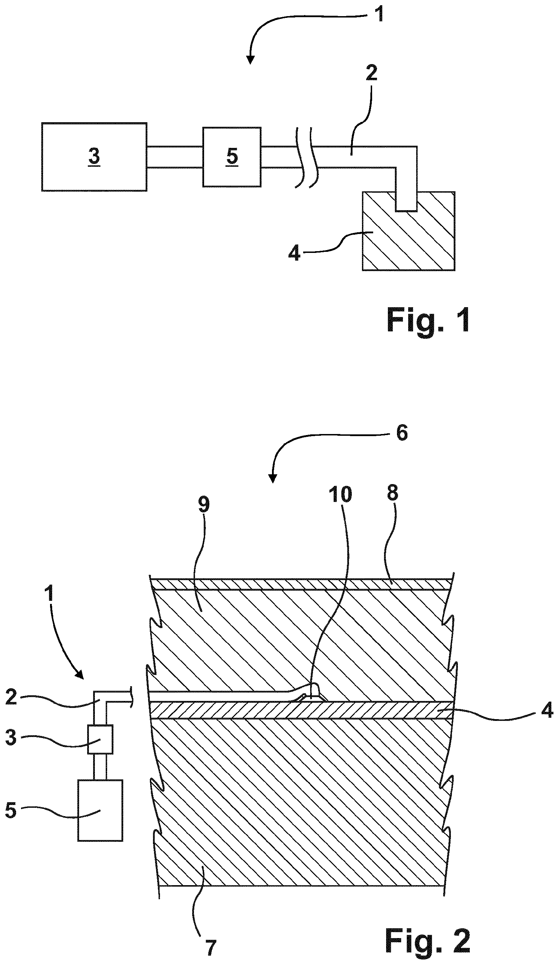

Fig. 1 zeigt eine einfache Variante einer erfindungsgemäßen Vorrichtung 1 zur Erkennung eines Lecks. Hierbei umfasst die Vorrichtung 1 eine Leitung 2, wobei ein erstes Ende der Leitung 2 mit einer Saugeinrichtung 3 in Fluidverbindung steht. Ein zweites Ende der Leitung 2 ist im Wesentlichen in oder an einem saugfähigen Material 4 positioniert, sodass die Leitung 2 vom saugfähigen Material 4 zur Saugeinrichtung 3 führt. Darüber hinaus ist eine Messeinrichtung 5 zur Analyse eines Fluids in einer Flussrichtung zwischen dem saugfähigen Material 4 und der Saugeinrichtung 3 angeordnet.
Üblicherweise umfasst die Messeinrichtung 5 zumindest einen Sensor, insbesondere mehrere Sensoren, zur Analyse des Fluids. Der Sensor oder die Sensoren sind zweckmäßigerweise als Feuchtigkeitssensor und/oder Temperatursensor ausgebildet. In der Regel ist die Messeinrichtung 5 so positioniert, dass das in der Leitung 2 geführte Fluid mit dieser messbar ist. Die Leitung 2 ist in der Regel als Schlauch oder Rohr ausgebildet. Ein Innendurchmesser der Leitung 2 beträgt bevorzugt weniger als 15 mm, insbesondere weniger als 10 mm, besonders bevorzugt weniger als 5 mm. Üblicherweise wird eine Leitung 2 mit einem Innendurchmesser von etwa 2 mm eingesetzt. Als Material für die Leitung 2 kann ein insbesondere flexibler Kunststoff eingesetzt werden.

Hierfür kann, wie in der schematischen Darstellung gezeigt, das erste Ende der Leitung 2 im Wesentlichen in die Messeinrichtung 5 münden, wobei diese wiederum über ein Leitungsstück mit der Saugeinrichtung 3 verbunden ist. Hierbei kann die Messeinrichtung 5 einen mit dem Fluid füllbaren Innenraum aufweisen, in welchem der zumindest eine Sensor angeordnet ist. Alternativ dazu kann die Leitung 2 im Wesentlichen durch die Messeinrichtung 5 hindurch führen, wobei der zumindest eine Sensor vorzugsweise in einen Innenraum der Leitung 2 ragt. Um die Messeinrichtung 5 auf geringem Bauraum zu realisieren, kann vorgesehen sein, dass der zumindest eine Sensor im Innenraum der Leitung 2 angeordnet ist oder in diesen hinein ragt.

Das saugfähige Material 4 weist üblicherweise eine Vielzahl von Hohlräumen, Poren, Kapillaren oder dergleichen auf, welche mit einem Fluid, insbesondere von einem Gas, wie beispielsweise einer Umgebungsluft, füllbar sind. Wenn das saugfähige Material 4 eine durch das Leck eintretende Flüssigkeit aufnimmt, so wird eine Feuchtigkeit des Fluids in diesen Hohlräumen erhöht. Um das Fluid zu analysieren und gegebenenfalls die Feuchtigkeit und/oder die Temperatur zu messen, wird dieses im Wesentlichen von der Saugeinrichtung 3 angesaugt und somit aus dem saugfähigen Material 4 und durch die Leitung 2 geführt. Günstig ist es, wenn das saugfähige Material 4 ein Gewebe, wie beispielsweise ein Vlies, umfasst. Alternativ dazu kann das saugfähige Material 4 aus einer Dämmwolle bestehen. Im Wesentlichen kann das saugfähige Material 4 beliebig geformt sein. Beispielsweise kann das saugfähige Material 4 eine Kugel, einen Quader bzw. Würfel oder eine polsterähnliche Form ausbilden. Üblicherweise ist das saugfähige Material 4 jedoch flächig, beispielsweise als Lage, Schicht oder Membran, ausgebildet.

In Fig. 2 ist eine mehrschichtige Konstruktion 6, wie beispielsweise ein Flachdach, mit einer Vorrichtung 1 zur Erkennung eines Lecks dargestellt. Die Konstruktion 6 umfasst eine untere Schicht 7, beispielsweise eine betonierte Decke, und eine obere Schicht 8, beispielsweise eine Abdichtungslage. Zwischen der unteren Schicht 7 und der oberen Schicht 8 sind üblicherweise mehrere Schichten, wie etwa eine Dampfsperre, eine Dämmung 9, weitere Abdichtungslagen und gegebenenfalls ein Vlies vorgesehen. Im gezeigten Ausführungsbeispiel ist das saugfähige Material 4 zwischen der oberen und der unteren Schicht 7 angeordnet. Darüber hinaus ist die Dämmung 9 zwischen der oberen Schicht 8 und dem saugfähigen Material 4 vorgesehen. Bevorzugt ist ein Vlies, welches normalerweise ohnedies bei Flachdächern eingesetzt wird, als saugfähiges Material 4 vorgesehen. Somit ist kein zusätzliches Material erforderlich.

Bei dieser Ausführungsform weist die Leitung 2 am zweiten Ende ein optionales Saugstück 10 auf, mit welchem die Leitung 2 am saugfähigen Material 4 befestigt ist. Ferner kann, unabhängig davon ob ein Saugstück 10 vorhanden ist oder nicht, vorgesehen sein, dass die Leitung 2 oberhalb des saugfähigen Materials 4 verlegt ist.

Wenn beispielsweise die Abdichtungslage und/oder die Dämmung 9 undicht werden, sodass eine Flüssigkeit bis zum saugfähigen Material 4 durchsickern kann, so nimmt das saugfähige Material 4 diese Flüssigkeit auf, bevor die Flüssigkeit die untere Schicht 7 erreicht. Hierbei wird insbesondere im Bereich des saugfähigen Materials 4 die Feuchtigkeit, vor allem eine Luftfeuchtigkeit, erhöht. Durch Anlegen eines Unterdrucks an die Leitung 2 mittels der Saugeinrichtung 3 kann nun das Fluid, beispielsweise eine Luft, aus dem saugfähigen Material 4 bzw. aus den Hohlräumen im saugfähigen Material 4 abgesaugt und durch die Messeinrichtung 5 oder an dem Sensor bzw. den Sensoren der Messeinrichtung 5 vorbei geführt werden. Mit der Messeinrichtung 5 wird das abgesaugte Fluid analysiert, wobei beispielsweise ein veränderter Messwert der Luftfeuchtigkeit und/oder der Temperatur auf ein Leck hindeutet.

Darüber hinaus kann die eintretende Flüssigkeit, welche sich gegebenenfalls zwischen der unteren und der oberen Schicht 8 sammelt, durch die Leitung 2 abgepumpt werden.

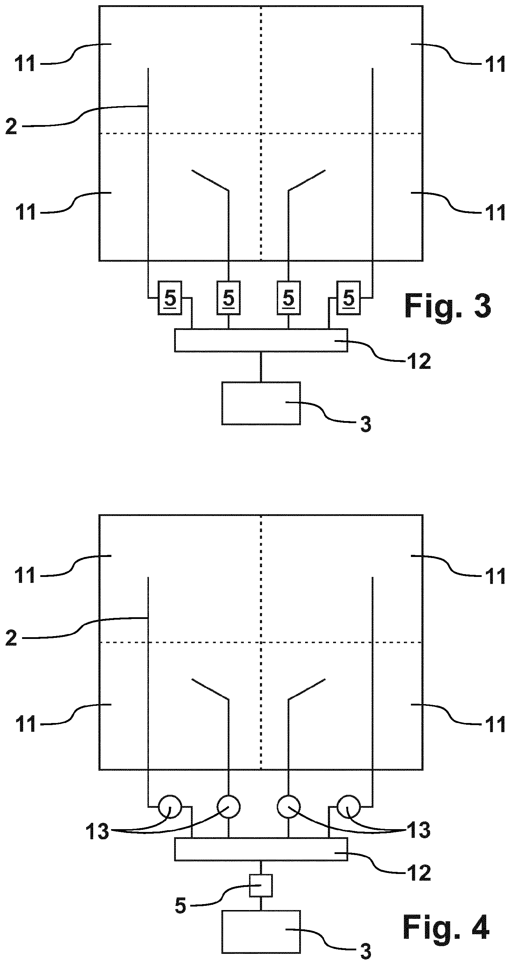

In Fig. 3 ist eine Fläche, beispielsweise eine Dachfläche, gezeigt, welche in vier, insbesondere fiktive, Messbereiche 11 unterteilt ist. Die Vorrichtung 1 zur Erkennung eines Lecks ist hierbei mit vier Leitungen 2 ausgebildet, wobei jede Leitung 2 in einen unterschiedlichen Messbereich 11 führt. Den Leitungen 2 ist hierbei jeweils eine Messeinrichtung 5 zugeordnet, wobei die Leitungen 2 anschließend an die Messeinrichtung 5 in einem gemeinsamen Sammelstück 12 münden. Das Sammelstück 12 steht wiederum in Fluidverbindung mit der Saugeinrichtung 3, beispielsweise über eine weitere Leitung 2.

Um die Fläche auf ein Leck zu überprüfen, kann nun ein Unterdruck an sämtliche Leitungen 2 gleichzeitig angelegt werden, wobei das aus dem jeweiligen Messbereich 11 abgeführte Fluid in der korrespondierenden Messeinrichtung 5 analysiert wird. Weicht beispielsweise ein Messwert aus einem ersten Messbereich 11 von den Messwerten der übrigen Messbereiche 11 ab, so deutet dies auf eine Anomalie hin. Ist beispielsweise der Messwert für eine Luftfeuchtigkeit aus dem ersten Messbereich 11 höher als jener aus den übrigen Messbereichen 11, so befindet sich mit hoher Wahrscheinlichkeit zumindest ein Leck im ersten Messbereich 11. Umgekehrt kann ein niedriger Messwert im ersten Messbereich 11 im Vergleich zu den Messwerten aus den übrigen Messbereichen 11 auf jeweils zumindest ein Leck oder undichte Stellen in diesen hindeuten.

In Fig. 4 ist eine alternative Ausführungsform dargestellt, wobei die Dachfläche oder ein anderer Teil eines Bauwerkes wiederum in vier Messbereiche 11 unterteilt ist. Hierbei weisen die Leitungen 2 jeweils ein Absperrventil 13 auf. Anschließend an das Absperrventil 13 münden die Leitungen 2 in das gemeinsame Sammelstück 12, welches in Fluidverbindung mit der Saugeinrichtung 3 steht. Bei dieser Ausführungsform ist die Messeinrichtung 5 zwischen der Saugeinrichtung 3 und dem Sammelstück 12 angeordnet, wodurch lediglich eine Messeinrichtung 5 erforderlich ist. Um das zuvor beschriebene Verfahren durchzuführen, kann nun jeweils ein Absperrventil 13 geöffnet und somit ein Unterdruck an die korrespondierende Leitung 2 angelegt werden. Dabei wird ein Fluid aus dem entsprechenden Messbereich 11 abgeführt und in der Messeinrichtung 5 analysiert. Dieser Vorgang kann für mehrere, insbesondere sämtliche, Messbereiche 11 wiederholt werden, wonach die gemessenen Messwerte, wie zuvor beschrieben, verglichen werden. Zum Vergleichen der Messwerte ist die Messeinrichtung 5 bzw. sind die Messeinrichtungen 5 bevorzugt mit einer Auswerteeinheit verbunden.

Selbstverständlich kann die zu überwachende Fläche in beliebig viele Messbereiche 11 unterteilt werden, wobei eine Anzahl von Leitungen 2 zumindest einer Anzahl von Messbereichen 11 entspricht. Je mehr Messbereiche 11 vorgesehen und/oder je kleiner diese sind, desto präziser kann das Leck lokalisiert werden.

Mit einer solchen Vorrichtung 1 ist es demnach einerseits möglich, zuverlässig und frühzeitig ein Leck zu erkennen. Andererseits ist es auch möglich, die Position des Lecks auf einen bestimmten Bereich einzuschränken. Das Einsatzgebiet einer derartigen Vorrichtung 1 ist jedoch nicht auf Dächer, wie beispielsweise Flachdächer, beschränkt.

Eine derartige Vorrichtung 1 kann auch zur Überwachung von Wänden oder anderen Abschlusselementen, welche dicht sein sollen, beispielsweise bei Kellern, eingesetzt werden. Ferner können sämtliche Merkmale, welche für eine einzige Leitung 2 beschrieben wurden, bei einer beliebigen Anzahl von Leitungen 2 und insbesondere bei sämtlichen Leitungen 2 der Vorrichtung 1 vorgesehen sein.

## Patentansprüche

1. Vorrichtung (1) zur Erkennung eines Lecks, insbesondere bei Dächern, umfassend zumindest eine Leitung (2), in welcher ein Fluid führbar ist, wobei eine Saugeinrichtung (3) mit einem ersten Ende der zumindest einen Leitung (2) in Fluidverbindung steht, **dadurch gekennzeichnet, dass** ein saugfähiges Material (4) vorgesehen und ein zweites Ende der zumindest einen Leitung (2) so angeordnet ist, dass das Fluid aus dem saugfähigen Material (4) abführbar ist, wobei zumindest eine Messeinrichtung (5) zur Analyse des Fluids mit der Leitung (2) in Fluidverbindung steht.

2. Vorrichtung (1) nach Anspruch 1, **dadurch gekennzeichnet, dass** das saugfähige Material (4) flächig ausgebildet ist.

3. Vorrichtung (1) nach Anspruch 1 oder 2, **dadurch gekennzeichnet, dass** die Messeinrichtung (5) zur Messung einer Luftfeuchtigkeit und/oder einer Temperatur ausgebildet ist.

4. Vorrichtung (1) nach einem der Ansprüche 1 bis 3, **dadurch gekennzeichnet, dass** die zumindest eine Leitung (2) ein Absperrventil (13) aufweist.

5. Vorrichtung (1) nach einem der Ansprüche 1 bis 4, **dadurch gekennzeichnet, dass** die Saugeinrichtung (3) einen Regler aufweist, mit welchem eine Saugkraft auf einen definierten Wert, insbesondere auf einen Wert zwischen 0,1 bar und 1 bar, besonders bevorzugt zwischen 0,2 bar und 0,3 bar, einstellbar ist.

6. Vorrichtung (1) nach einem der Ansprüche 1 bis 5, **dadurch gekennzeichnet, dass** die zumindest eine Leitung (2) zumindest teilweise oberhalb des saugfähigen Materials (4) verlegt ist.

7. Vorrichtung (1) nach einem der Ansprüche 1 bis 6, **dadurch gekennzeichnet, dass** die zumindest eine Leitung (2) an dem zweiten Ende ein Saugstück (10) aufweist, welches an dem saugfähigen Material (4) befestigbar oder befestigt ist.

8. Vorrichtung (1) nach einem der Ansprüche 1 bis 7, **dadurch gekennzeichnet, dass** mehrere Leitungen (2) vorgesehen sind, welche mit der Saugeinrichtung (3) in Fluidverbindung stehen.

9. Vorrichtung (1) nach einem der Ansprüche 1 bis 8, **dadurch gekennzeichnet, dass** die Leitungen (2) in ein gemeinsames Sammelstück (12) münden, wobei die Saugeinrichtung (3) über das Sammelstück (12) mit den Leitungen (2) in Fluidverbindung steht.

10. Vorrichtung (1) nach einem der Ansprüche 1 bis 9, **dadurch gekennzeichnet, dass** die Messeinrichtung (5) zwischen der Saugeinrichtung (3) und dem Sammelstück (12) positioniert ist.

11. Konstruktion (6), insbesondere ein Dach, mit einer unteren Schicht (7), einer oberen Schicht (8) und einer Vorrichtung (1) nach einem der Ansprüche 1 bis 10, **dadurch gekennzeichnet, dass** das saugfähige Material (4) zwischen der unteren Schicht (7) und der oberen Schicht (8) angeordnet ist und die Konstruktion (6) mehrere Messbereiche (11) aufweist, wobei zu jedem Messbereich (11) zumindest eine korrespondierende Leitung (2) vorgesehen ist, deren zweites Ende im jeweiligen Messbereich (11) positioniert ist.

12. Verwendung einer Vorrichtung (1) nach einem der Ansprüche 1 bis 10 zur Erkennung und/oder Lokalisierung eines Lecks bei Abschlusselementen, wie beispielsweise Wänden oder Dächern.

13. Verfahren zur Erkennung eines Lecks, insbesondere bei Dächern, wobei mit einer Saugeinrichtung (3) ein Unterdruck an zumindest eine Leitung (2) angelegt wird, um ein Fluid durch die Leitung (2) zu befördern, **dadurch gekennzeichnet, dass** das Fluid aus einem saugfähigen Material (4) abgeführt und zu einer Messeinrichtung (5) geführt wird, wobei mit der Messeinrichtung (5) zumindest ein Messwert des Fluids erfasst wird, welcher mit zumindest einem weiteren Messwert verglichen wird.

14. Verfahren nach Anspruch 13, **dadurch gekennzeichnet, dass** das Fluid aus mehreren Messbereichen (11) durch korrespondierende Leitungen (2) abgeführt wird, wobei für die Messbereiche (11) separate Messwerte erfasst werden.

15. Verfahren nach Anspruch 14, **dadurch gekennzeichnet, dass** die erfassten Messwerte verglichen werden, um ein Leck in jenem Messbereich (11) zu orten, dessen Messwert von den übrigen Messwerten über ein Toleranzintervall hinaus abweicht.
